# EUROPÄISCHE PATENTSCHRIFT

(11) **EP 2 474 506 B1**
(45) Veröffentlichungstag und Bekanntmachung des Hinweises auf die Patenterteilung: **10.07.2013**
(21) Anmeldenummer: 10015618.1
(22) Anmeldetag: 14.12.2010
(51) Int. Cl.: C02F 1/44, B01D 61/22, B01D 61/20, B01D 61/18, B01D 61/14, B01D 61/02, C02F 1/32, C02F 1/02

(54) **System und Verfahren zur Wasseraufbereitung**
System and method for treating water
Système et procédé de préparation d'eau

(43) Veröffentlichungstag der Anmeldung: 11.07.2012
(73) Patentinhaber: Anlagen- und Energietechnik, 74357 Bönnigheim (DE)
(72) Erfinder: Puls, Norbert Jürgen, 22589 Hamburg (DE); Pramor, Horst, 22962 Siek (DE); Hartig, Uwe, 74357 Bönningheim (DE); Baumann, Jörn, 25421 Pinneberg (DE)
(74) Vertreter: Stürken, Joachim

(56) Entgegenhaltungen:
- WO-A1-2006/022719
- AU-A1- 2008 202 311
- US-A1- 2008 128 355
- US-B1- 6 592 763

## Beschreibung

### Einleitung

Die Erfindung betrifft allgemein das Gebiet der Wasseraufbereitung. Insbesondere betrifft die Erfindung ein System und ein Verfahren zur Leitung von Flüssigkeiten wie insbesondere von Wasser, mit dem unerwünschte Bestandteile in einer zumindest vorübergehend ruhenden oder strömungsfrei gestellten Flüssigkeit wirksam reduziert oder eliminiert werden können.

### Stand der Technik und Nachteile

Einleitend sei angemerkt, dass sich die nachfolgenden Erläuterungen beispielhaft auf wässrige Flüssigkeiten wie insbesondere Wasser beziehen, grundsätzlich aber auch für andere Flüssigkeiten Gültigkeit besitzen.

Das für Betriebs- und Trinkzwecke bereitgestellte Wasser unterliegt strengen Hygieneanforderungen, deren Einhaltung durch eine Vielzahl von Vorschriften geregelt und überwacht wird. Bei Verstoß gegen diese Vorschriften drohen, neben den gesundheitlichen Risiken für die Betroffenen, empfindliche Konsequenzen für die Verantwortlichen. Aus diesen Gründen müssen Vorkehrungen getroffen werden, um jederzeit eine ausreichend hohe Qualität des Wassers zu gewährleisten.

Im Wesentlichen bestehen zwei Wege, über welche Wasser, selbst wenn es zunächst in einwandfreier Form in ein Rohrsystem eingespeist wird, verunreinigt werden kann. Zum Einen können in diesem Rohrsystem unerwünschte Bestandteile vorhanden sein, welche mit dem Wasser in Kontakt kommen, sich in diesem lösen und es somit verunreinigen. Typische Quellen können insbesondere die Wandungen der Rohrleitungen, aber auch Dichtungen, Pumpen, Ventile und dergleichen sein. Zum Anderen können sich im Rohrsystem Mikroorganismen entwickeln, welche frei schwimmend oder an einer Oberfläche fixiert als so genannte Biofilme auftreten. Beispielhaft für Mikroorganismen seien hier Legionellen genannt, welche zu ernsthaften gesundheitlichen Problemen führen. Derartige Mikroorganismen können beispielsweise über die Nahrung aufgenommen werden. Speziell für Legionellen wird als Hauptinfektionsweg jedoch das Einatmen erregerhaltiger, lungengängiger Aerosole aus dem Warmwasserbereich angesehen. Somit stellen auch Duschen oder an der Entnahmestelle (Wasserhahn) entstehende Aerosole Gefahrenquellen dar. Dabei ist bekannt, dass sich solche Mikroorganismen ganz vorwiegend nur bei Stagnation, also in stehendem Wasser vermehren, wohingegen sie in dauerhaft fließenden Rohrleitungen nicht zum Problem werden. Da in der großtechnischen Wasseraufbereitung ein ständiges Strömen des Wasser der Normalfall ist, fokussiert sich die Erfindung insbesondere auf das Gebiet der entnahmenahen Rohr- oder Leitungssysteme, wie sie beispielsweise in Krankenhäusern, Schwimmbädern, Schulen, Turnhallen, Fitnesscentern, aber auch in Privathäusern anzutreffen sind.

Eine Methode zur Abtötung besagter Mikroorganismen besteht im Einsatz von ultraviolettem Licht (UV-Licht). Das hochenergetische Licht zerstört die Organismen, wobei die abgestorbenen Bestandteile weiterhin im Wasser vorhanden sind. Dies ist zum Einen aus hygienischen Gründen wenig akzeptabel, zum Anderen können aber selbst diese Bestandteile toxisch oder allergen wirken, solange sie im Wasser vorhanden sind und z. B. über die Nahrung inkorporiert werden. Ein weiteres Problem besteht in der möglichen gegenseitigen Abschattung der Mikroorganismen während der Bestrahlung, weshalb diese Maßnahme üblicherweise nicht zu einer vollständigen Abtötung aller Mikroorganismen führt. Ferner sind Sporen bildende Organismen zu berücksichtigen, deren Sporen einer Abtötung durch UV-Licht nicht immer zugänglich sind. Dieser Ansatz zur Reinhaltung von Betriebs- und Trinkwasser ist daher nur durch ein mehrfaches Durchlaufen der Bestrahlungseinrichtung oder durch Vorsehen mehrerer sequenzieller Bestrahlungseinrichtungen zu vermeiden, was mit entsprechend hohem Zeit- und Energieaufwand einhergeht.

Eine andere Methode sieht die Erhitzung des Wassers vor, so dass die Organismen denaturiert werden. Hierfür notwendige Temperaturen betragen typischerweise mindestens 60 bis 70°C. Nachteilig hierbei sind wiederum das Vorhandensein der denaturierten Reststoffe im Wasser, und der hohe Energieaufwand, der zum Erhitzen des Wassers nötig ist. Für den Fall, dass das an einer Zapfstelle zu entnehmende Wasser (wieder) kalt sein soll, ist zudem häufig noch ein Wiederabkühlen desselben erforderlich, was abermals Energie erfordert.

Beiden Methoden gemein ist, dass die nachträgliche Desinfektion des Wassers aufwändig und somit teuer ist, und dass weitere Vorkehrungen getroffen werden müssen, um die abgetöteten Mikroorganismen aus dem Wasser zu entfernen, bevor es aus einer Zapfstelle entnommen wird.

Zur Entfernung von Partikeln bestimmter Größe können entsprechend fein ausgestaltete Filter eingesetzt werden. Besonders vorteilhaft sind so genannte Ultrafiltrationssysteme (UF-Systeme). Bei diesen strömt das verunreinigte Wasser typischerweise durch eine Vielzahl dünner Kapillaren, die seitliche Filteröffnungen definierter Größe aufweisen. Durch diese Öffnungen tritt nur das gereinigte Wasser aus, wohingegen das mit Schmutz immer weiter angereicherte Wasser am Ende der Kapillare periodisch oder kontinuierlich einem Entsorgungsabfluss zugeführt wird. Das gereinigte Wasser aus den in einer Vielzahl vorhandenen Kapillaren wird hingegen zentral gesammelt und steht am Ausgang des Filters zur Verfügung. Dort kann es an einer Zapfstelle entnommen oder in ein Rohrsystem für sauberes Wasser eingeleitet werden. Ultrafiltrationssysteme sind sowohl zum Entfernen genannter Mikroorganismen als auch anderer Schweb- und Trübstoffe geeignet und bekannt. In Wasser lösliche Stoffe, wie z.B. gesundheitsschädliche Salze (ein- und zweiwertige Ionen), oder Giftstoffe wie z.B. Pflanzengifte oder Uran, sind allein mit UF-Techniken nicht handhabbar. Zwar können derartige Stoffe gut mit Umkehrosmosetechnik oder Elektro-Deionisation aus dem Wasser separiert werden; dies würde jedoch eine Veränderung der chemischen Zusammensetzung des Wassers für den menschlichen Bedarf bedeuten, was unerwünscht ist. Lediglich die so genannte "Nanofiltration", bei der mit deutlich kleineren Porengrößen als bei der ansonsten ähnlichen UF-Technik gearbeitet wird, bietet entsprechende Möglichkeiten.

Obwohl UF-Systeme im Vergleich zu Porenfiltern höhere Initialkosten verursachen, sind sie den Porenfiltern aufgrund der Möglichkeit ihrer vergleichsweise einfachen Reinigung zumindest mittelfristig überlegen.

Die Verwendung von UF-Systemen hat sich jedoch in solchen Situationen als problematisch erwiesen, in denen das mittels Ultrafiltration gereinigte Wasser dem Leitungssystem nicht unmittelbar entnommen wird, also zumindest vorübergehend nicht strömt. Wie bereits erwähnt, können sich in stehendem, kaltem bzw. nicht ausreichend heißem Wasser Mikroorganismen bilden. Während dies für das noch in den Kapillaren befindliche Wasser unerheblich ist, führt eine Wiederbesiedelung des stromabwärts der UF-Einrichtung befindlichen Flüssigkeitsvolumens im Zeitraum seines Stillstandes zu einer Rekontamination, die unbedingt zu vermeiden ist. Durch die typischerweise sehr große Oberfläche derartiger Filtersysteme können katalytische Verkeimungen mit extrem hohen Grenzwertüberschreitungen auftreten. Zur Vermeidung dieses Problems werden die UF-Systeme regelmäßig mit chemischer Reinigungsflüssigkeit gespült und/oder zerlegt und mechanisch gesäubert. Beide Methoden sind nachteilig, da im einen Fall wiederum gesundheitsschädliche Substanzen ins Rohrsystem eingebracht werden, und im anderen Fall mit entsprechenden Ausfallzeiten zu rechnen ist.

Ein weiteres Problem betrifft die Möglichkeiten einer möglichst zeitnahen Feststellung einer unzulässigen Belastung durch unerwünschte Bestandteile wie insbesondere durch Mikroorganismen. Nach dem Stand der Technik kann nahezu jedes Gebäude von einer Kontamination beispielsweise durch Legionellen betroffen sein, ohne dass dieses durch die gängige Beprobungspraxis präventiv aufgedeckt werden könnte, da diese mit bis zu 10 Tagen einen deutlich zu langen Zeitraum in Anspruch nimmt.

### Aufgabe der Erfindung und Lösung

Aufgabe der Erfindung ist es daher, ein System zur Leitung von Flüssigkeiten sowie ein Verfahren zur Reduzierung der Belastung eines solchen Systems mit Mikroorganismen bereitzustellen, wodurch eine Rekontamination bereits gereinigten Wassers auch dann vermieden wird, wenn dieses Wasser vorübergehend nicht an einer Zapfstelle entnommen wird und daher im Wesentlichen nicht strömt.

Das System und das Verfahren sollen insbesondere sowohl für den Betrieb im Bereich öffentlicher Leitungsnetze wie z.B. im Schwimmbad, in Pflegeeinrichtungen oder in Sporthallen, als auch zur Verwendung im häuslichen Bereich privater Leitungsnetze geeignet sein.

Das erfindungsgemäße System und das hierauf aufbauende Verfahren sollen einen signifikant geringeren Energieverbrauch als herkömmliche Systeme und Verfahren aufweisen, welche der Vermeidung der Rekontamination von Flüssigkeiten dienen.

Zudem sollen das System und das Verfahren unabhängig vom Verschmutzungsgrad jederzeit beste Reinigungsergebnisse liefern.

### Beschreibung

Nachfolgend wird zunächst das erfindungsgemäße System detailliert beschrieben.

Das erfindungsgemäße System zur Leitung und Reinigung von Flüssigkeiten umfasst in Strömungsrichtung einen ersten Abschnitt mit einer Einspeisestelle, einen zweiten Abschnitt in Form einer Ultrafiltrationseinheit zur mechanischen Abscheidung von Mikroorganismen , und einen dritten Abschnitt mit mindestens einer Entnahmestelle. Dabei weist der dritte Abschnitt eine Verbindung zu einem vierten Abschnitt auf, über den ein Flüssigkeitsvolumen des dritten Abschnittes zumindest teilweise der Ultrafiltrationseinheit zuführbar ist, und wobei der vierte Abschnitt eine weitere Ultrafiltrationseinheit aufweist. Als Mikroorganismen kommen insbesondere organische pathogene Feststoffe wie Viren, Bakterien, oder Bestandteile derselben in Betracht.

Der erste Abschnitt ist demnach der Bereich eines insbesondere wässrige Flüssigkeiten führenden Leitungssystems, in welchen die Flüssigkeit in das System eingespeist wird. Dies kann beispielsweise ein Hausanschluss für das Trinkwassernetz eines Privathauses, der Zufluss aus einer Zisterne, oder lediglich ein kurzes Teilstück sein, welches sich in unmittelbarer Nähe vor dem zweiten Abschnitt befindet.

Der zweite Abschnitt wird im Wesentlichen durch Bereitstellung einer Ultrafiltrationseinheit zur mechanischen Abscheidung von Mikroorganismen gebildet. Idealerweise endet der erste Abschnitt unmittelbar an dieser Einheit. Es ist jedoch klar, dass auch Leitungsabschnitte vor und hinter dieser Einheit zum zweiten Abschnitt hinzugezählt werden können. Die Einheit arbeitet mechanisch, also beispielsweise mittels Poren, durch welche nur die Flüssigkeit hindurchtreten kann, die Mikroorganismen jedoch nicht. Die Porengröße beträgt dabei bevorzugt 0,02 µm, so dass Molekülmassen von ca. 100 bis 150 kDa gefiltert werden. Aus der Verwendung einer mechanisch arbeitenden Einheit resultiert unter anderem auch die erfindungsgemäß gewünschte Reduzierung des Energieverbrauchs. Zudem werden auch bereits abgetötete Bestandteile von Mikroorganismen zuverlässig herausgefiltert, was bei alleiniger Anwendung von UV-Licht und/oder Erhitzung nicht der Fall ist.

Stromabwärts des zweiten Abschnitts schließt sich ein dritter Abschnitt an. Die von ihm definitionsgemäß umfasste Entnahmestelle, die sich bevorzugt an seinem Ende befindet, kann beispielsweise ein Wasserhahn oder ein Ablauf sein. Sie kann jedoch auch durch ein Rohrstück gebildet sein, welches sich an den zweiten Abschnitt anschließt, ohne dass die Flüssigkeit direkt vom dritten Abschnitt an die Luft oder die Außenwelt gelangt. Insofern dient der dritte Abschnitt lediglich dazu, dass die Flüssigkeit das erfindungsgemäße System wieder verlassen kann. Das Flüssigkeitsvolumen des dritten Abschnitts ist dasjenige Volumen, welches dem System nach der Reinigung entnommen wird. Seine Entnahmestelle weist eine Verbindung zur Außenwelt auf, die auch ein anderes Leitungssystem sein kann. Für den Fall, dass gerade keine Entnahme stattfindet, strömt die Flüssigkeit jedenfalls im dritten Abschnitt nicht, so dass die eingangs genannten Stagnationsprobleme auftreten können. Zudem wird das Volumen der Flüssigkeit des dritten Abschnitts nicht erneut gereinigt. Somit ist das Volumen des dritten Abschnitts dasjenige Volumen, welches in möglichst vollständigem Umfang vor einer Rekontamination geschützt werden muss.

Dazu weist der dritte Abschnitt erfindungsgemäß eine Verbindung zu einem vierten Abschnitt auf. Dieser vierte Abschnitt ist so angeordnet, dass durch ihn das möglicherweise rekontaminierte Flüssigkeitsvolumen aus dem dritten Abschnitt zumindest teilweise der Ultrafiltrationseinheit zuführbar ist. Er bildet demnach eine Art "Bypass" für den zweiten Abschnitt. "Teilweise" bedeutet, dass je nach Anordnung der Verbindung nur ein gewisser Teil des Gesamten, im dritten Abschnitt vorhandenen Flüssigkeitsvolumens rückführbar ist. Derjenige Teil des Volumens, der sich zwischen der Verbindung und der Entnahmestelle befindet, wird kaum oder gar nicht rückgeführt, da dort keine relevante Strömung stattfindet. Es ist klar, dass die Anforderung, ein möglichst vollständiges Volumen des dritten Abschnitts vor Rekontamination zu schützen, dadurch erreicht wird, indem die o.g. Verbindung möglichst nah an der Entnahmestelle bzw. dem stromabwärts gelegenen Ende des dritten Abschnitts angeordnet ist. Durch erneute Passage dieser Flüssigkeit durch den zweiten Abschnitt und die dort angeordnete Ultrafiltrationseinheit wird die ursprünglich bereits im dritten Abschnitt befindliche - und somit unmittelbar zur Entnahme zur Verfügung stehende - Flüssigkeit von Mikroorganismen gereinigt. Die Reinigung erfolgt also, bevor diese Flüssigkeit tatsächlich das erfindungsgemäße System verlässt und so zu einer Gefährdung führen kann.

Erfindungsgemäß ist bevorzugt, dass die Flüssigkeit eine wässrige Flüssigkeit ist. Besonders bevorzugt ist die Flüssigkeit Wasser, insbesondere kaltes Wasser. Die nachfolgenden Ausführungsformen werden daher am Beispiel von kaltem Wasser als Flüssigkeit erläutert. Es ist jedoch klar, dass sich die Erfindung auch auf anders geartete und/oder temperierte Flüssigkeiten beziehen kann, bei denen die oben genannten Probleme auftreten können, wie z.B. bei Nährlösungen. "Kalt" meint dabei die typischen Temperaturen, welche Wasser in entsprechenden Kaltwasserleitungen annimmt. Diese liegen mindestens etwas oberhalb des Gefrierpunkts, typischerweise im Bereich der Erdbodentemperatur von 8 bis 13 °C, wobei die Flüssigkeit bei Lagerung oder Transport dann die Temperatur der Umgebung annimmt. Somit kann die Temperatur in Kaltwasserleitungen, z.B. in warmen Ländern oder stark geheizten Räumen, durchaus mehr als 40 °C betragen.

Sofern aus dem System kein Wasser entnommen wird, wird zunächst auch keiner der Abschnitte von Wasser durchströmt. Erfindungsgemäß ist jedoch erforderlich, dass gerade während dieser Phasen das Wasser des dritten Abschnittes in den ersten Abschnitt rückgeführt bzw. der Ultrafiltrationseinheit zugeführt wird. Demnach ist vorgesehen, dass der vierte Abschnitt ferner ein Fördermittel umfasst. Dieses Fördermittel dient dazu, Wasser aus dem dritten Abschnitt abzuziehen, und durch den vierten Abschnitt in den ersten Abschnitt einzugeben bzw. der UF-Einheit zuzuführen. Das dort eingegebene Wasser kann nun ausschließlich durch den zweiten Abschnitt ab- bzw. weiterfließen und durchläuft dabei die Ultrafiltrationseinheit. Schließlich gelangt es wieder in den dritten Abschnitt, von wo es nötigenfalls erneut im soeben beschriebenen Kreislauf gefördert wird. Es ist klar, dass das Fördermittel dazu geeignet ist, das Wasser mindestens in die soeben beschriebene Richtung des Kreislaufs zu fördern. In bestimmten Fällen kann jedoch auch die zumindest temporäre Möglichkeit eines entgegengesetzten Förderns vorteilhaft sein.

Grundsätzlich kommen alle bekannten Fördermittel, also jegliche Geräte für die Förderung bzw. zum Transport wässriger Fluide, für die besagte Aufgabe in Betracht. Besonders bevorzugt ist das Fördermittel eine Pumpe. Da das System beim Schließen der Entnahmestelle unter statischem Druck steht, der sich auf beiden Seiten der Pumpe ausgleicht, muss die Pumpe lediglich derart dimensioniert sein, dass sie gegen einen geringen Druck wie beispielsweise 100 mbar bei einer Förderleistung von beispielsweise 1 1/min arbeiten kann. Gleichzeitig muss sichergestellt sein, dass sie dem statischen Druck, der in Kaltwasserleitungen typischerweise 1,5 bar beträgt, mit ausreichendem Sicherheitsfaktor standhalten kann. Eine dementsprechende Auslegung ist für den Fachmann kein Problem.

Die Pumpe ist bevorzugt ausgewählt aus der Gruppe bestehend aus Kreiselpumpen, Membranpumpen, Rotationskolbenpumpen, Impellerpumpen, Exzenterschneckenpumpen, Kolbenpumpen, Schlauch- oder Peristaltikpumpen, Schraubenspindelpumpen und Zahnriemenpumpen. Als Pumpentyp kommen besonders bevorzugt Pumpen des Typs "Kreiselpumpe" in Betracht. Kreiselpumpen sind beispielsweise als Radialpumpen, Diagonalpumpen und Axialpumpen verfügbar. Diese Pumpentypen sind insbesondere aufgrund ihrer Effizienz, ihrer Zuverlässigkeit, sowie der guten Verfügbarkeit bei konkurrenzfähigen Kosten geeignet.

Denkbar ist auch eine Verdrängung von Flüssigkeitsvolumina beispielsweise durch Patronen, die unter hohem Druck stehen, den sie an geeigneter Stelle zwischen drittem und viertem Abschnitt abgeben und so zu einem Fördern des Wassers führen. Derartige Vorrichtungen sind insbesondere als Notlösungen sinnvoll, um z.B. auch im Falle eines Stromausfalls kurzfristig eine, wenn auch begrenzte, Menge an Förderenergie zur Verfügung zu stellen. Dabei ist sicherzustellen, dass der Überdruck an anderer Stelle (stromabwärts des zweiten Abschnitts) wieder abgebaut werden kann, da andernfalls kein ausreichendes Fördern von Flüssigkeit zu erwarten ist, da diese im Normalfall inkompressibel ist. Förderenergie dieses Typs kann ferner auch durch einen externen Anschluss erfolgen, welcher insbesondere im vierten Abschnitt angeordnet ist, und durch den Flüssigkeit oder Gas unter entsprechendem Druck in das System eingebbar ist.

Erfindungsgemäß weist die Ultrafiltrationseinheit (UF-Einheit) mindestens einen Eingangsbereich und einen Ausgangsbereich auf. Wenngleich der Bestandteil "Ultra" typischerweise auf eine Abtrennung von Partikeln der Größe 0,1 bis 0,01 µm hindeutet (darunter wird oft von Nanofiltration, darüber von Mikrofiltration gesprochen), ist der konkrete Filtertyp und dessen Abscheidungsgrad von der jeweiligen Aufgabenstellung abhängig und kann durchaus auch die angrenzenden Gebiete der Filtration umfassen oder auf ihnen liegen.

Ultrafiltrationseinheiten sind hinlänglich aus dem Stand der Technik bekannt. Ihre Wirkungsweise beruht auf einer perforierten Membran, deren Poren nur Partikel bis zu einer bestimmten Größe passieren lassen. Größere Partikel werden von der Membran zurückgehalten. UF-Einheiten sind demnach den Oberflächenfiltern zuzurechnen, im Gegensatz zu Tiefenfiltern, wie beispielsweise Sand- oder Kiesfiltern. Eine bevorzugte Bauform einer UF-Einheit ist der Aufbau in einer Säule. Das Rohwasser wird der UF-Einheit über einen gemeinsamen Eingangsbereich zugeführt. Dieser verzweigt in die Innenräume einer Vielzahl dünner Röhren oder Hohlfasern mit einem typischen Innendurchmesser von lediglich 0,7 bis 2 mm, bevorzugt 1,5 mm, sowie einem typischen Außendurchmesser von ca. 6,0 mm. Sie weisen in ihren Wandungen besagte Poren auf, durch die das auch Filtrat genannte, gereinigte, also aufbereitete Wasser in einen Entnahmeraum abfließt. In diesem Entnahmeraum wird das Filtrat zusammengeführt und verlässt die UF-Einheit durch einen gemeinsamen Ausgangsbereich. Das je nach Anwendungsfall auszuwählende Material zeichnet sich dabei durch eine hohe Chemikalienbeständigkeit aus. Im Falle der Trinkwasseraufbereitung wird bevorzugt Polyethersulfon (kurz: PESU oder PES) als Material ausgewählt.

Bei der so genannten "Dead-End"-Technik wird das gesamte Rohwasser in Filtrat umgesetzt. Nach und nach sammeln sich jedoch immer mehr zurückgehaltene Partikel im Inneren der Filterröhren an. Um ein Zusammenbacken der Partikel und ein Verstopfen der Poren zu verhindern oder zumindest zu verringern, ist es vorteilhaft, wenn der relative Druckunterschied beiderseits der Membran gering ist. Als vorteilhaft hat sich ein Wert von weniger als 1 bar, beispielsweise 0,3 bar, erwiesen. Ein größerer Druckunterschied erbringt zwar theoretisch eine höhere Separationsrate, birgt jedoch auch ein höheres Risiko des Verstopfens der Poren, und benötigt deutlich mehr Energie. Erfahrungen zeigen, dass mit einer technischen Auslegung, die einen Druckverlust bis ca. 0,3 bar im System zulässt, besonders gute und auch wirtschaftliche Ergebnisse erzielt werden.

Im Gegensatz dazu streicht bei der so genannten "Cross-Flow"-Technik laufend belastete Flüssigkeit an der einen Seite des Filters entlang, von der immer nur ein Teil der Flüssigkeit durch die Poren auf die Rein-Seite gelangt. Die übrige, leicht angereicherte Flüssigkeit kann dann zirkuliert und erneut am Filter entlanggeführt werden. Zwar tritt hier das Problem des Zusammenbackens nicht auf, nachteilig ist jedoch die geringe Separationsgeschwindigkeit bzw. die große Menge an umzuwälzendem belasteten Fluid.

Um die dauerhafte Betriebsfähigkeit des Filters zu gewährleisten, muss dieser periodisch regeneriert, also gereinigt bzw. entleert werden. Dazu weist dieser häufig an demjenigen Ende der Säule, welches dem Eingangsbereich gegenüber liegt, einen Spülbereich auf, welcher in analoger Weise mit den allerdings gegenüberliegenden Enden der Innenräume der Röhren oder Hohlfasermembranen verbunden ist. Wird dieser Spülbereich geöffnet, strömt zumindest ein Teil der Flüssigkeit nicht durch die Poren, sondern spült das Partikelkonzentrat aus den Röhren in den Spülbereich, von wo aus es einer Entsorgung zugeführt werden kann. Je nach Anwendungsfall kann der Spülbereich temporär oder dauerhaft geöffnet sein, so dass nur ein bestimmter Prozentsatz des Rohwassers in Filtrat umgesetzt wird. Dementsprechend wechseln sich hier ggf. Dead-End- und Cross-Flow-Technik einander ab. Außerdem kann es vorteilhaft sein, wenn der Spülvorgang mit einer (temporären) Umkehr der Strömungsrichtung einhergeht.

Vorteilhaft an der UF-Technologie ist der im Verhältnis zu Technologien wie der Reinigung mittels UV-Licht oder durch Erhitzung deutlich geringere Energieverbrauch, sowie ein sicherer Betrieb auch bei einem Energieausfall. Mittels UF-Technologie kann Wasser rein mechanisch keimfrei gemacht werden. Durch entsprechend feine Poren können eingeschränkt sogar Medikamentenrückstände oder Schwermetalle aus dem Rohwasser entfernt werden, wobei dann korrekterweise eher von "Nanofiltration" gesprochen wird. Die UF-Technologie ist somit in der Lage, die hohen Anforderungen, die sich gerade im Hinblick auf die überarbeitete deutsche Trinkwasserverordnung ergeben, zu erfüllen und zu übertreffen, gemäß derer gerade auch der Einsatz von UF-Systemen zur Aufbereitung von Wasser für den menschlichen Gebrauch statthaft ist (vgl. "Liste der Aufbereitungsstoffe und Desinfektionsverfahren gemäß § 11 Trinkwasserverordnung 2001", Stand 2010).

Im Rahmen der zur Erfindung durchgeführten Experimente hat sich jedoch überraschenderweise herausgestellt, dass selbst ein die drei obigen Abschnitte aufweisendes Leitungssystem nur unzureichende Ergebnisse liefert, sofern das im dritten Abschnitt befindliche Flüssigkeitsvolumen zumindest vorübergehend strömungsfrei gestellt ist. Im Hinblick auf Mikroorganismen lässt sich dieser Befund nur dadurch erklären, dass sich im dritten Abschnitt ausgehend von verbliebenen Restkeimen, deren Anzahl im Rahmen einer Beprobung möglicherweise unterhalb der diagnostischen Nachweisgrenze liegen kann, durch Proliferation ein quantitativ relevanter Keimtiter einstellt. Wird nun die Entnahmestelle des dritten Abschnittes geöffnet, weist die entnommene Flüssigkeit diesen relevanten Keimtiter auf, weshalb das erfindungsgemäße System den zuvor bereits angesprochenen vierten Bereich umfasst.

Ein weiteres Problem kann grundsätzlich dadurch entstehen, dass Wasser entgegen der oben beschriebenen Kreislaufrichtung vom zweiten in den ersten, und über das Fördermittel gar in den dritten Abschnitt gelangen kann. Dies ist insbesondere dann möglich, wenn das Fördermittel stillsteht, also kein aktiver Transport des Flüssigkeitsvolumens vom dritten über den vierten in den ersten bzw. zweiten Abschnitt erfolgt. Da das Wasser am Eingangsbereich des zweiten Abschnitts entweder rekontaminiertes Wasser aus dem dritten Abschnitt, oder noch überhaupt nicht gereinigtes Rohwasser aus der Einspeisestelle des ersten Abschnitts ist, wäre somit ohne weitere Vorkehrungen eine Verschmutzung des dritten Abschnitts die Folge. Daher ist erfindungsgemäß vorgesehen, dass das System im vierten Abschnitt eine weitere Ultrafiltrationseinheit umfasst, mit der sowohl dem im ersten Abschnitt als auch im rohwasserseitigen Teil des zweiten Abschnitts befindlichen, mit Mikroorganismen belasteten Flüssigkeitsvolumen eine Umgehung des zweiten Abschnittes in Strömungsrichtung verwehrt werden kann. Mit anderen Worten wird dafür gesorgt, dass das Wasser lediglich in die gewünschte Richtung, nämlich vom dritten durch den vierten in den ersten bzw. zweiten Abschnitt förderbar ist, oder dass zumindest belastende Partikel an einem entsprechenden Übertritt gehindert werden.

Die weitere Ultrafiltrationseinheit ist derart in den vierten Abschnitt eingefügt, dass ein Rückfluss über diesen Abschnitt entgegen der Förderrichtung nicht möglich ist. Somit wird auf einfache Weise ein Rückfluss von kontaminiertem Wasser aus dem Eingangsbereich der UF-Einheit (2. Abschnitt) sowohl in den ersten als auch in den vierten Bereich verhindert.

Alternativ kann es jedoch bereits ausreichen, nicht die gesamte Flüssigkeit an dem vorstehend beschriebenen Rückfluss zu hindern, sondern lediglich die in ihr vorhandenen Mikroorganismen zurückzuhalten. Daher umfasst auch der vierte Abschnitt eine Ultrafiltrationseinheit zur mechanischen Abscheidung von Mikroorganismen. Diese fungiert demgemäß also als Mittel gegen Rückfluss. Durch Anordnung dieser weiteren Ultrafiltrationseinheit innerhalb des vierten Abschnitts kann sichergestellt werden, dass kontaminiertes Wasser, welches den Eingangsbereich der im zweiten Abschnitt angeordneten ersten Ultrafiltrationseinheit unerwünscht in Richtung des vierten Abschnitts verlässt, zunächst die weitere Einheit passieren muss, bevor es in den Bereich des vierten Abschnitts, und von dort aus möglicherweise in den dritten Abschnitt gelangt. Mikroorganismen, die im Rohwasserbereich des zweiten Abschnitts vorhanden sind, werden so effektiv am Übertritt über den "Bypass" und somit vorbei an der UF-Einheit des zweiten Abschnitts gehindert, da sie die Hohlfasermembranen der weiteren Einheit in keiner Richtung passieren können.

Im Rahmen einer bevorzugten Ausführungsform ist ferner vorgesehen, dass das erfindungsgemäße System mindestens eine Sicherung gegen Beschädigung oder Zerstörung der Ultrafiltrationseinheit umfasst. Druckstöße aufgrund schnell anlaufender Pumpen oder zu schnell schließender Magnetventile können zu sehr schnellen Druckanstiegen im System führen, wodurch die meist dünnwandigen Hohlfasermembranen beschädigt werden können. Auch scharfkantige Partikel wie beispielsweise Metallspäne, die mit dem Rohwasser mitschwimmen, können das Innere der UF-Einheit beschädigen. Gegen Druckspitzen sind bevorzugt Vorrichtungen zur schnellen Druckentlastung wie z.B. Sicherheitsventile vorzusehen, welche bevorzugt im dritten Abschnitt angeordnet sind. Scharfkantige Partikel können durch entsprechend unempfindliche Grobfilter stromaufwärts des zweiten Abschnitts aus dem Rohwasser herausgefiltert werden.

Nach einer weiteren Ausführungsform umfasst das System ferner mindestens ein diagnostisches Mittel zur qualitativen und/oder quantitativen Bestimmung von Mikroorganismen in der Flüssigkeit. Dieses Mittel dient der möglichst zeitnahen Erfassung des Zustands des im System befindlichen Wassers. Auf diese Weise kann schnell, bevorzugt in Echtzeit, auf eine Veränderung der Menge der Mikroorganismen reagiert werden, indem beispielsweise bei Überschreiten eines Grenzwertes das Fördermittel in Betrieb genommen wird, um durch Umwälzen und erneutes Filtern des im dritten Abschnitt befindlichen Wassers den Grenzwert wieder zu unterschreiten. Gewünschtenfalls kann diese Aufgabe auch von einem weitgehend automatisierten Regelkreis übernommen werden. Vorzugsweise ist das diagnostische Mittel im Bereich des dritten Abschnittes angeordnet, wobei eine Anordnung zwischen dem Ausgangsbereich der Ultrafiltrationseinheit und der Verbindung zum vierten Abschnitt besonders bevorzugt ist.

Derartige diagnostische Mittel können insbesondere mikrobiologische Testvorrichtungen umfassen, auf chromatgraphischer Basis arbeiten, und/oder molekulargenetische Diagnosemethoden nutzen, um den Gehalt (Quantität) an und/oder die Bestimmung (qualitativ) von Mikroorganismen zu erfassen. Besonders bevorzugt kommen Laser-Partikel-Zähler oder auch selektive DNA-online-Analytiken zum Einsatz.

Nach einer weiteren Ausführungsform umfasst das System ferner Vorrichtungen, die aus der Gruppe bestehend aus Biosensoren, Trübungssensoren, Strömungssensoren, Drucksensoren, Sandfiltern, UV-Desinfektionseinheiten, Hitzebehandlungseinheiten, Beprobungsstellen, und Probenentnahmestellen ausgewählt sind.

Dabei umfasst das System insbesondere im Bereich des vierten Abschnitts vorzugsweise ferner einen Strömungs- und/oder Drucksensor zur Erfassung des Strömungszustands, und/oder einen Sensor zur Erfassung der Belastung der Flüssigkeit mit Mikroorganismen.

Unter Verwendung eines oder mehrerer den genannten Sensoren kann die oben bereits angesprochene zeitnahe Erfassung des Zustands des im System befindlichen Wassers erfolgen. Die Strömungs- oder Drucksensoren dienen der Erfassung des Strömungszustandes im System, so dass ein entsprechend vorzusehender Regelkreis bevorzugt selbsttätig für einen Betrieb des Fördermittels sorgt, wenn die Entnahmestelle, optional seit einer vorbestimmbaren Zeitspanne, geschlossen ist. Die Filter dienen dem zusätzlichen Herausfiltern von groben Bestandteilen und/oder dem Herstellen einer zusätzlichen Sicherheit gegen das Auftreten mikrobiologischer Bestandteile, wozu auch die Hitzebehandlung einsetzbar ist. Die Beprobungsstelle und die Probenentnahmestelle(n) dienen beispielsweise dem "Impfen" des Rohwassers für Funktionstests der Sensorik, beispielsweise der manuellen Entnahme zur Durchführung von externen Untersuchungen des Wassers, um beispielsweise die Reinigungsfunktion. der UF-Einheiten zu verifizieren.

Für den Fall, dass stromabwärts der o.g. Verbindung noch längere Rohrabschnitte existieren, die einer Verkeimungsgefahr ausgesetzt sind, welche durch die Wirkung des erfindungsgemäß vorgesehenen vierten Abschnitts nicht erreicht werden kann, ist es vorteilhaft, auch diese Abschnitte einem vorgegebenen Plan entsprechend zu spülen, oder sie mit Sensoren zu versehen, um das kontaminierte Volumen bedarfsgerecht auszutauschen. Da die technischen Parameter des dritten Abschnitts bis zu einer belasteten Position bekannt sind (Rohrleitungslänge, -dimension und -inhalt), sind Verkeimungen innerhalb eines bekannten Leitungsnetzes daher gezielt bearbeitbar.

Nachfolgend wird das erfindungsgemäße Verfahren detailliert beschrieben. Dabei wird aus Gründen der Übersichtlichkeit auf eine Wiederholung der bereits im Rahmen des erfindungsgemäßen Systems dargestellten Sachverhalte verzichtet.

Demgemäß betrifft die Erfindung nach einem weiteren Aspekt ein Verfahren zur Reduzierung der Belastung einer in einem System zur Leitung und Reinigung von Flüssigkeiten enthaltenen, zumindest vorübergehend strömungsfreien Flüssigkeit mit Mikroorganismen, wobei das System in Strömungsrichtung einen ersten Abschnitt mit einer Einspeisestelle, einen zweiten Abschnitt in Form einer Ultrafiltrationseinheit zur mechanischen Abscheidung von Mikroorganismen, sowie einen dritten Abschnitt mit mindestens einer Entnahmestelle umfasst, und wobei der dritte Abschnitt ferner eine Verbindung zu einem vierten Abschnitt aufweist, über den ein Flüssigkeitsvolumen des dritten Abschnittes zumindest teilweise der Ultrafiltrationseinheit zuführbar ist. Erfindungsgemäß betrifft die Reduzierung der Belastung das im dritten Abschnitt enthaltene Flüssigkeitsvolumen, wobei die Reduzierung erfolgt, indem dieses Flüssigkeitsvolumen über den vierten Abschnitt zumindest teilweise der Ultrafiltrationseinheit zugeführt wird.

Die aus dem Stand der Technik bekannten Verfahren sehen lediglich eine Reinigung derart vor, dass das aus einem ersten Abschnitt einfließende Wasser im zweiten Abschnitt gereinigt und im dritten Abschnitt entnommen wird. Demgegenüber stellt das erfindungsgemäße Verfahren sicher, dass das unter ungünstigen Umständen sowohl im dritten Abschnitt, als auch im reinwasserseitigen Bereich der Ultrafiltrationseinheit durch Rekontamination belastete Wasser einer erneuten Reinigung unterzogen wird, anstatt belastet der Entnahmestelle zugeführt und dem System entnommen zu werden.

Wie erwähnt, weist hierzu der dritte Abschnitt eine Verbindung zu dem vierten Abschnitt auf, über den zumindest ein Teilvolumen der im dritten Abschnitt vorhandenen Flüssigkeit der Ultrafiltrationseinheit des zweiten Abschnittes (wieder-) zugeführt wird. Auf diese Weise wird sichergestellt, dass beispielsweise durch Stagnation oder auch unzureichende Reinigung rekontaminiertes Wasser einem erneuten Reinigungsprozess unterworfen wird, indem es der Ultrafiltrationseinheit erneut zugeführt wird.

Dabei wird die im dritten Abschnitt vorhandene, belastete Flüssigkeit der Ultrafiltrationseinheit des zweiten Abschnittes über den vierten Abschnitt kontinuierlich oder diskontinuierlich (wieder) zugeführt. Eine kontinuierliche Zuführung ist dann zu bevorzugen, wenn schon bei sehr kurzzeitiger Stagnation des Wassers mit einer Rekontamination des auf der Reinwasserseite der Ultrafiltrationseinheit oder im dritten Abschnitt befindlichen Wassers zu rechnen ist, wenn eine kontinuierliche Überprüfung des entsprechenden Volumens notwendig ist, wie es beispielsweise in Krankenhäusern der Fall sein kann, oder wenn die durch das Fördermittel erreichbaren Strtimungsgeschwindigkeiten sehr gering sind. Gewöhnlich wird jedoch eine diskontinuierliche Zuführung ausreichen, in deren Rahmen bevorzugt eine periodische Bestimmung des Gehalts an und/oder der Qualität von Mikroorganismen erfolgt. Nur im Falle des Überschreitens eines Grenzwertes wird das für den vierten Abschnitt vorzugsweise vorgesehene Fördermittel für einen längeren Zeitraum in Betrieb genommen, um für eine Reinigung des rekontaminierten Wassers zu sorgen.

Erfindungsgemäß wird der Flüssigkeit im ersten Abschnitt des Systems durch ein im vierten Abschnitt angeordnetes Mittel gegen Rückfluss in Form einer wieteren Ultrafiltrationseinheit eine Umgehung des zweiten Abschnittes in Strömungsrichtung verwehrt. Demnach erfolgt das Verwehren durch Bereitstellung einer weiteren Ultrafiltrationseinheit als Einrichtung zur mechanischen Abscheidung im vierten Abschnitt. Hierzu sei wiederum auf die obigen Darlegungen zum erfindungsgemäßen System verwiesen.

Wie bereits erwähnt ist bevorzugt, dass kontinuierlich oder diskontinuierlich eine quantitative und/oder qualitative Messung der Mikroorganismen erfolgt. Die Anordnung der Messtechnik erfolgt jeweils Anwender- und Anlagenspezifisch. Gemessen wird vorzugsweise der genetische Fingerabdruck der Mikrobiologie. Durch optionale Einspielung geeigneter Sequenzen kann über die Messeinrichtung das Verhalten des Systems beobachtet und dokumentiert werden. Die hierzu notwendige Entnahme von Proben, und somit die Position des Messpunkts, sollte bevorzugt zwischen dem reinwasserseitigen Ende der ( ersten) Ultrafiltrationseinheit zur mechanischen Abscheidung und der Abzweigung vom dritten in den vierten Abschnitt liegen. Dabei ist besonders bevorzugt, dass die Messung periodisch, programmgesteuert oder bedarfsgesteuert erfolgt. Die periodische Messung wird demnach in vorbestimmten Zeitintervallen durchgeführt, während die programmgesteuerte Messung zu vorbestimmten Zeitpunkten erfolgt. Die bedarfsgerechte Messung schließlich erfolgt beispielsweise nur dann, wenn eine Stagnation oder ein anderer Zustand (z.B. beschleunigte Vermehrung von Mikroorganismen aufgrund von Erwärmung) vorliegt, welcher eine Erhöhung der Rekontamination wahrscheinlich macht (vgl. Ausführungsbeispiel unten).

Im Hinblick auf eine bedarfsgerechte Messung ist es besonders bevorzugt, dass die (erneute) Zuführung der Flüssigkeit vom dritten Abschnitt über den vierten Abschnitt über die Ultrafiltrationseinheit des zweiten Abschnittes von dem Ergebnis der Messung der Mikroorganismen abhängt. Mit anderen Worten wird ein das Fördermittel und Sensoren umfassender Regelkreis etabliert, welcher selbsttätig eine Messung des Gehalts an Mikroorganismen durchführt, je nach Messergebnis den oben ausführlich beschriebenen Förderkreislauf durch den vierten Abschnitt in Gang setzt, und, bei Unterschreiten des jeweiligen Grenzwertes, auch wieder anhält. Es ist klar, dass alternativ oder zusätzlich auch eine manuelle Steuerung dieses Vorgangs möglich sein sollte, und dass ferner durch die Steuerung bevorzugt ein Protokoll angefertigt wird, welches beispielsweise von einem Bediener ausgelesen oder zu Dokumentationszwecken aufbewahrt werden kann.

Nach einer weiteren Ausführungsform findet zusätzlich ein Reinigungsschritt der Ultrafiltrationseinheit(en) statt. Ggf. wird dazu Reinigungsmittel stromaufwärts vom zweiten Abschnitt in das System eingegeben, während die Flüssigkeit ggf. zusammen mit dem Reinigungsmittel, nach dem Passieren des zweiten Abschnitts besonders bevorzugt in einen Spülbereich abfließt, von wo aus sie entsorgt werden kann, anstatt in den dritten Bereich zu fließen. Für den erfindungsgemäßen, Fall, dass die Einrichtung zur mechanischen Abscheidung eine UF-Einheit ist, gelten sinngemäß wiederum die oben gemachten Aussagen bezüglich deren Spülbarkeit.

Durch die vorliegende Erfindung werden die erwähnten Nachteile des Standes der Technik wirkungsvoll beseitigt. Das erfindungsgemäße System verhindert eine Rekontamination bereits gereinigten Wassers auch dann, wenn dieses Wasser vorübergehend nicht an einer Zapfstelle entnommen wird und daher nicht strömt.

Da das Wasser weder erhitzt noch wieder abgekühlt werden muss, wird zum Betrieb des erfindungsgemäßen Systems und zur Durchführung des erfindungsgemäßen Verfahrens nur wenig Energie benötigt.

Es müssen neben den erfindungsgemäßen keine weiteren Vorkehrungen getroffen werden, um die abgetöteten Mikroorganismen aus dem Wasser zu entfernen, bevor es z.B. aus einer Zapfstelle entnommen wird.

Eine Rekontamination bereits gereinigten Wassers ist durch Anordnung des vierten Abschnitts und Anordnung der weiteren Ultrafiltrationseinheit systembedingt ausgeschlossen.

Aufgrund der einfach gestalteten und unproblematisch zu wartenden Komponenten sind System und Verfahren sowohl für den Betrieb im Bereich öffentlicher Leitungsnetze als auch zur Verwendung im häuslichen Bereich privater Leitungsnetze sowie in mobilen Systemen geeignet.

Aufgrund der einfachen Kombinierbarkeit des erfindungsgemäßen Systems mit entsprechender Sensorik kann die Reaktionszeit zwischen dem Auftreten einer unerwünschten Verschmutzung und ihrer Beseitigung deutlich verkürzt werden.

### Figurenbeschreibung

- Figur 1: zeigt ein Leitungssystem nach dem Stand der Technik.
- Figur 2: zeigt ein System nach einer ersten Ausführungsform.
- Figur 3: zeigt eine zweite Ausführungsform des Systems.
- Figur 4: zeigt die erfindungsgemäße Ausführungsform des Systems.

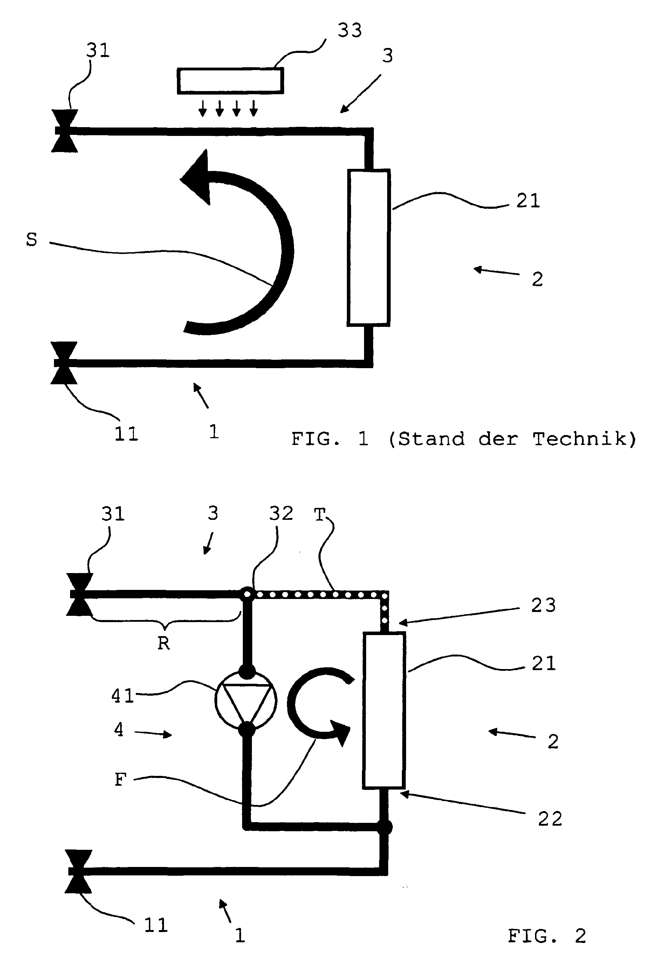

In der **Figur 1** ist ein Leitungssystem dargestellt, wie es aus dem Stand der Technik bekannt ist. Durch eine Einspeisestelle 11 kann Flüssigkeit wie beispielsweise Wasser in einen ersten Abschnitt 1 des Systems eingegeben werden. Dort fließt es in Strömungsrichtung S in Richtung einer Entnahmestelle 31, welche sich am Ende eines dritten Abschnitts 3 befindet. Zwischen diesen beiden Abschnitten 1 und 3 ist ein zweiter Abschnitt 2 angeordnet, welcher die Reinigungseinrichtung enthält, die beispielsweise, wie dargestellt, eine Einrichtung zur mechanischen Abscheidung 21 ist.

Bei Stagnation der Strömung besteht die Gefahr, dass sich im Bereich des dritten Abschnitts 3 unerwünschte Bestandteile wie beispielsweise Mikroorganismen anreichern. Diese werden dann bei einem erneuten Einsetzen der Strömung aus dem dritten Abschnitt 3 und der Entnahmestelle 31 herausgetragen und können so zu einer Gefährdung führen.

Wahlweise kann im dritten Abschnitt 3 eine weitere Reinigungseinrichtung 33 vorgesehen sein. Dargestellt ist eine mit UV-Licht arbeitende UV-Desinfektionsbeleuchtungsanlage. In ungünstigen Fällen weist diese jedoch den Nachteil einer unvollständigen Reinigung auf, da sich Partikel gegenseitig abschatten können. Auch ist eine derartige Einrichtung nicht bei größerer Trübung einzusetzen. Alternativ werden auch Erhitzungseinrichtungen eingesetzt (nicht dargestellt). Diese haben jedoch einen hohen Energieverbrauch und bieten selbst bei 70°C, auf welches kaltes Wasser zunächst erwärmt und gewünschtenfalls wieder heruntergekühlt werden müsste, keinen vollständigen Schutz vor einer Keimbelastung.

Die **Figur 2** zeigt ein Leitungssystem, welches die Nachteile des Standes der Technik bereits zum Teil überwindet. Zusätzlich zu den im Rahmen der Figur 1 bereits beschriebenen und daher hier nicht erneut aufgeführten Merkmalen weist das System nunmehr im dritten Abschnitt 3 eine Verbindung 32 auf. Diese führt in einen vierten Abschnitt 4. Wesentliches Merkmal des vierten Abschnitts 4 ist, dass über ihn ein Teilvolumen T (punktiert dargestellt) der im dritten Abschnitt 3 vorhandenen Flüssigkeit der Einrichtung zur mechanischen Abscheidung 21 zuführbar ist. Der vierte Abschnitt 4 bildet demgemäß einen "Bypass" für den zweiten Abschnitt 2. Bereits gereinigte, jedoch aufgrund Stagnation rekontaminierte Flüssigkeit des dritten Abschnitts 3 kann so dem Eingangsbereich 22 der Einrichtung zur mechanischen Abscheidung 21 des zweiten Abschnitts 2 wieder zugeführt werden, wo sie einer erneuten Reinigung unterzogen wird, anstatt im rekontaminierten Zustand an der Entnahmestelle 31 des dritten Abschnitts 3 das System zu verlassen. Es ist dabei klar, dass die Lage der Verbindung 32 prinzipiell beliebig im dritten Abschnitt sein kann, dass es jedoch vorteilhaft ist, wenn sie sich möglichst nahe an der Entnahmestelle 31 befindet. Dadurch wird das Restvolumen R, welches nicht erneut gereinigt werden kann, minimiert. Es ist außerdem klar, dass die Stelle, an welcher eine Einspeisung aus dem vierten Abschnitt 4 in den Eingangsbereich 22 der Einrichtung zur mechanischen Abscheidung 21 erfolgt, variabel ist. So kann sie auch im Bereich des ersten Abschnitts 1 liegen.

Es ist jedoch vorteilhaft, die Lage in etwa wie in der Figur 2 dargestellt zu wählen, da auf diese Weise die Menge der rückgeführten Flüssigkeit minimiert wird, ohne die erfindungsgemäße Funktion zu beeinträchtigen.

Wie gezeigt, ist im vierten Abschnitt 4 ein Fördermittel 41 in Form einer Pumpe angeordnet. Die Förderrichtung F ist dabei so eingestellt, dass die Flüssigkeit vom dritten Abschnitt 3 über die Verbindung 32 und den vierten Abschnitt 4 zum Eingangsbereich 22 der Einrichtung zur mechanischen Abscheidung 21 gefördert wird. Von dort aus durchströmt die Flüssigkeit den gesamten zweiten Abschnitt 2, bis sie schließlich wieder in den dritten Abschnitt 3 gelangt. Je nach Bedarf kann dieses Umwälzen mehrmals erfolgen, wobei bei erfindungsgemäßer Verwendung einer Ultrafiltrationseinheit als Einrichtung zur mechanischen Abscheidung 21 schon bei einem einmaligen Umwälzen unerwünschte Bestandteile aus der rekontaminierten Flüssigkeit wirksam entfernt werden.

Ein Umwälzen kann aber auch stattfinden, um einer Rekontamination vorzubeugen, da sich relevante mikrobiologische Belastungen gewöhnlich nur bei Stagnation der Flüssigkeit ausbilden. Sofern durch einen Drucksensor (nicht dargestellt) ein Verschluss der Entnahmestelle 31, oder durch einen Strömungssensor (nicht dargestellt) Stagnation festgestellt wird, kann eine Regelung (nicht dargestellt) selbsttätig z.B. einen periodischen Betrieb des Fördermittels anstoßen, so dass sich eine Belastungen weder im Teilabschnitt T des dritten Abschnitts 3 noch in der Einrichtung zur mechanischen Abscheidung 21 entwickeln kann.

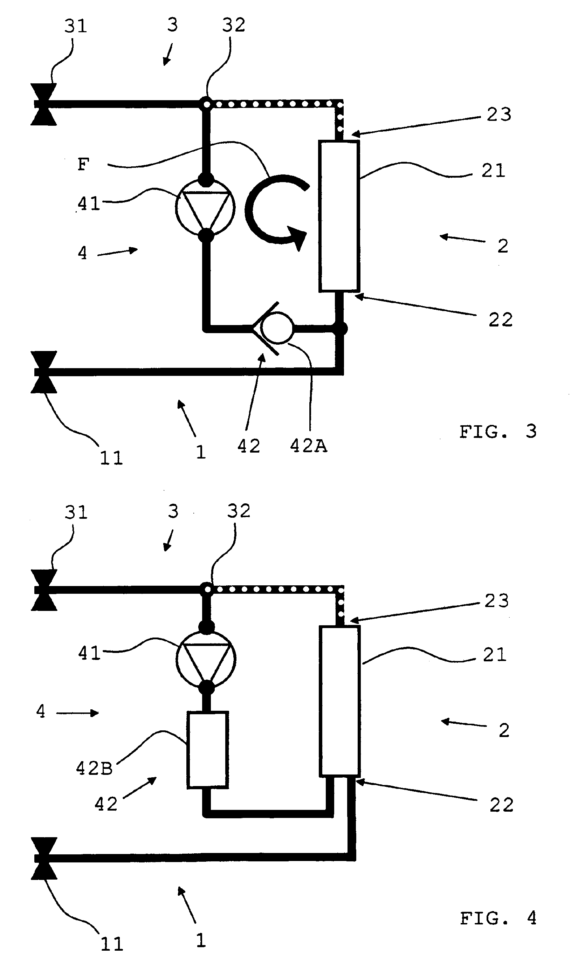

In der **Figur 3** ist eine bevorzugte Ausführungsform des Systems gezeigt, nach welcher in den vierten Abschnitt 4 ein Mittel gegen Rückfluss 42 in Form eines Rückschlagventils 42A eingefügt ist. Somit ist der Flüssigkeit, die vom ersten Abschnitt 1 in den zweiten Abschnitt 2 fließt, der Weg über den vierten Abschnitt 4 entgegen der Förderrichtung F verwehrt. Fördert das Fördermittel 41 hingegen in Förderrichtung F, kann die umgewälzte Flüssigkeit das Rückschlagventil 42A passieren.

Die **Figur 4** zeigt eine erfindungsgemäße Ausführungsform des Systems. Demnach ist das Mittel gegen Rückfluss 42 als eine weitere Ultrafiltrationseinheit zur mechanischen Abscheidung 42B ausgebildet. Durch Anordnung dieser weiteren Einheit 42B innerhalb des vierten Abschnitts 4 kann sichergestellt werden, dass kontaminierte Flüssigkeit, welche den Eingangsbereich 22 der im zweiten Abschnitt 2 angeordneten ersten Ultrafiltrationseinheit zur mechanischen Abscheidung 21 unerwünscht in Richtung des vierten Abschnitts 4 verlässt, zunächst die weitere Einheit 42B passieren muss, bevor sie in den Bereich des vierten Abschnitts 4, und von dort aus möglicherweise in den dritten Abschnitt 3 gelangt. Dabei wird die Flüssigkeit nicht wie in Fig. 3 gezeigt vollständig zurückgehalten, aber von Mikroorganismen gereinigt.

Nicht dargestellt ist die bevorzugte Möglichkeit der zusätzlichen Anordnung eines Rückschlagventils 42A im vierten Abschnitt 4. In Kombination mit der weiteren UF-Einheit zur mechanischen Abscheidung 42B ergibt sich so eine besonders wirkungsvolle Verhinderung eines Rückflusses sowohl von belastenden Mikroorganismen alleine als auch in Form von kontaminierter Flüssigkeit.

Zudem zeigt die Fig. 4 eine alternative Ausführungsform der Einspeisung der Flüssigkeit aus dem vierten Abschnitt 4 in den zweiten Abschnitt 2. Demnach weist der in der Figur 4 untenliegend dargestellte Eingangsbereich 22 der Einheit zur mechanischen Abscheidung 21 zwei separate Zuflüsse auf. Einer dieser Zuflüsse ist mit dem ersten Abschnitt 1, der andere mit dem vierten Abschnitt 4 verbunden. Die Zusammenführung der beiden Zuflüsse erfolgt demnach im nicht dargestellten Inneren der Einheit zur mechanischen Abscheidung 21.

Es ist klar, dass das erfindungsgemäße System noch weitere Komponenten wie insbesondere Spülanschlüsse für die UF-Einheit (en) zur mechanischen Abscheidung 21, 42B, Beprobungsstellen, Entnahmestellen, Sensoren, Regelungseinrichtungen, Ventile etc. aufweisen kann, die jedoch aus Gründen der Übersichtlichkeit nicht dargestellt sind. Hierzu wird auf die vorstehende Beschreibung verwiesen, wo entsprechende detaillierte Informationen dargelegt sind.

### Ausführungsbeispiel

Nachfolgend wird ein Ausführungsbeispiel zur Illustration der Funktionstüchtigkeit der erfindungsgemäßen Lehre gegeben. Es basiert auf Experimenten, die im Rahmen eines wissenschaftlichen Forschungsprojektes im Vorfeld der Anmeldung durchgeführt wurden.

Ausgangssituation der Versuche war eine mit Ultrafiltration ausgestattete Anlage nach dem Stand der Technik. Diese wies - entsprechend obiger Definition - drei Abschnitte auf. Ihre Konstruktion orientierte sich an dem Stand der Technik für Membranfiltrationsanlagen in Trinkwassersystemen. Der Einbau der Anlage erfolgte im Hausanschlussraum einer Sporthalle, unmittelbar am Eintrittsort der Wasserversorgungsleitung. Die Einbindung in das Kaltwassernetz erfolgte direkt nach der Wasseruhr sowie dem nachgeschalteten Vorfilter.

Im ersten Abschnitt befand sich zusätzlich ein Zugang für Beprobung und Probenentnahme. Im zweiten Abschnitt war der Ultrafiltrationsfilter, vorliegend ein Gerät der Firma PB International, eingebaut, dessen Leistung auf die zuvor bestimmten Leistungsdaten der Anlage ausgelegt war. Diese Daten betrafen insbesondere Angaben zur Trinkwasserqualität, zur Temperatur, zu mittlerer Durchflussmenge und Spitzendurchfluss, sowie zu den Druckverhältnissen. Der rückspülbare Ultrafiltrationsfilter wies eine nachweisliche Durchbruchsicherheit von 18 Monaten für Legionellen auf. Im dritten Abschnitt befand sich unmittelbar nach dem Ultrafiltrationsfilter ein weiterer Zugang für Beprobung und Probenentnahme. Daran schloss sich das Kaltwassernetz der Sporthalle an. Dies entspricht dem oben dargestellten Fall, bei dem sich an den dritten Abschnitt ein weiterführendes Rohrsystem anschließt.

Das Volumen des Wassers, welches sich in den drei Abschnitten befand, betrug ca. 50 1. Das sich daran anschließende Kaltwassernetz der Sporthalle wies eine Länge von ca. 200 m auf mit einem Trinkwasservolumen von ca. 100 1.

Bei Beginn der Inbetriebnahme der beschriebenen Anlage wurde eine Beprobung zwecks Funktionstest insbesondere der UF-Einheit vorgenommen. Demnach wurde untersucht, ob der Grenzwert der Koloniezahlen (Koloniebildende Einheit, KbE, engl. Colony Forming Unit, CFU) bei 20°C bzw. 36°C nach Trinkwasserverordnung 1990 eingehalten wurde, welche max. 100 CFU/ml erlaubt.

Dabei wurden im Abschnitt 2 folgende hygienische Parameter festgestellt:

| | |
|---|---|
| UF-Anlage Eingang | T=20°C: 1 CFU/ml |
| | T=36°C: 0 CFU/ml |
| UF-Anlage Ausgang | T=20°C: 0 CFU/ml |
| T=36°C: | 0 CFU/ml |

Die Werte belegen, dass das Wasser zu Beginn des Betriebs für die untersuchten bakteriologischen Parameter den Anforderungen der Trinkwasserverordnung entsprach.

Im Rahmen des nun folgenden Betriebs erfolgte im Rahmen des Waschens, des Duschens und der Toilettennutzung eine Entnahme von Wasser zu unterschiedlichen Zeiten, nutzungsbedingt jedoch mit den damit verbundenen längeren Stagnationszeiten (Nächte und Wochenenden).

Nach etwa dreiwöchigem Betrieb wurde erneut eine Messung der Anlage vorgenommen. Dabei wurden folgende hygienische Parameter festgestellt:

| | |
|---|---|
| UF-Anlage Eingang | T=20°C: 1 CFU/ml |
| | T=36°C: 2 CFU/ml |
| UF-Anlage Ausgang | T=20°C: >30.000 CFU/ml |
| | T=36°C: >3.000 CFU/ml |

Die Messungen belegten eindruckvoll, dass im Abschnitt 3 der Anlage, also der Reinwasserseite des UF-Filters, eine unzulässig hohe Verkeimung bestand. Das Wasser war somit für den menschlichen Gebrauch ungeeignet. Die Ergebnisse legten die Vermutung nahe, dass sich die Verkeimung im dritten Abschnitt der Anlage in Phasen entwickelte, in denen die Anlage nicht durchflossen wurde (Stagnationsphasen). Ferner lag die Vermutung nahe, dass eine Verkeimung durch die große Filteroberfläche des UF-Filters in Abschnitt 2 begünstig wurde.

Nun wurde die bestehende Anlage mit einem vierten Abschnitt ("Bypass") ausgerüstet. Somit konnte über eine im dritten Abschnitt angeordnete Verbindung Filtrat, welches vom UF-Filter abgegeben worden war, von der Reinwasserseite des Filters (Abschnitt 3) zurück auf dessen Eingangsseite (Abschnitt 1) geführt werden. Dies ermöglichte prinzipiell eine permanente Durchströmung des UF-Filters, und zwar auch dann, wenn gerade keine Entnahme des Wassers aus dem System erfolgte. Den Transport des Wassers übernahm im vorliegenden Versuch eine kleine Umwälzpumpe, die mit niedriger Energie betrieben wurde.

Ferner wurden Vorkehrungen für den Fall einer Fehlfunktion der Umwälzpumpe getroffen, da durch den Bypass nun eine direkte fluidische Verbindung zwischen erstem und drittem Abschnitt bestand. Ansonsten könnten möglicherweise im ersten Abschnitt vorhandene Bakterien den zweiten Abschnitt (UF-Filter) umgehen und über den vierten Abschnitt (Bypass) in den dritten Abschnitt und somit zur Entnahmestelle gelangen. Um eine Sicherheit auch bei Stromausfällen oder einem technischen Defekt der Pumpe zu gewährleisten, wurde daher im vierten Abschnitt ein weiterer UF-Filter angeordnet, der den oben beschriebenen Weg für unerwünschte Bestandteile blockiert. Gleichzeitig konnte dieser Filter möglicherweise vorhandene Bakterien abfangen, die während des Pumpenbetriebes aus dem dritten in den ersten Abschnitt transportiert wurden. Mit Hilfe von regelmäßigen Rückspülungen wurden derartige Verkeimungen entsorgt.

Im Rahmen eines praktischen Laborversuchs wurde der UF-Filter mit Hilfe der Pumpe über einen Zeitraum von 12 Wochen kontinuierlich durchströmt. Auf der Reinwasserseite konnte keine Verkeimung nachgewiesen werden, da durch den ständigen Durchfluss von Wasser und regelmäßige Rückspülung des Filters eine Biofilmbildung in ausreichendem Maße verhindert wurde. Somit kam es auch zu keiner Vermehrung von Keimen in der Anlage.

Die nunmehr erfindungsgemäß aufgebaute Anlage, deren vierter Abschnitt unmittelbar am Ausgang der UF-Einheit angeordnet war, wurde schließlich in das eingangs geschilderte Wassernetz der Sporthalle eingebaut. Der in obiger Figurenbeschreibung Teilabschnitt T genannte Teil des dritten Abschnitts fiel demnach relativ kurz aus. An diesen schloss sich die kaltwasserführende Verrohrung zur Versorgung von Duschen, WCs und Waschtischen an. Folgende maximalen Verkeimungswerte für das Kaltwassersystem wurden an der Anlage bzw. stromabwärts im Trinkwassernetz gemessen:

| | |
|---|---|
| UF-Anlage Eingang | T=20°C: 1 CFU/ml |
| | T=36°C: 300 CFU/ml |
| UF-Anlage Ausgang | T=20°C: 4 CFU/ml |
| | T=36°C: 4 CFU/ml |
| Trinkwassernetz | T=20°C: >3.000 CFU/ml |
| | T=36°C: >3.000 CFU/ml |

Wie die Messdaten belegen, filtert das erfindungsgemäße System effektiv Keime aus dem ersten Abschnitt heraus. Auf der Reinwasserseite beider UF-Anlagen waren die hygienischen Verhältnisse einwandfrei. Eine Verkeimung der Filter oder des Trinkwassersystems durch die UF-Anlagen war nicht nachweisbar. Erst in größerer Entfernung von der Anlage, und somit außerhalb der Reichweite des erfindungsgemäßen vierten Abschnitts und seiner Reinigungswirkung, erhöhten sich die Belastungen, da diese Abschnitte nicht wie erfindungsgemäß vorgesehen gespült werden können.

Durch Verwendung einer dem erfindungsgemäßen System entsprechenden Anlage konnte die Belastung stromabwärts einer UF-Einheit, wie sie aus dem Stand der Technik bekannt ist, bei Stagnation der Flüssigkeit wirksam verringert werden. Dabei konnte vollständig auf weitere Maßnahmen wie UV-Bestrahlung oder Erhitzung auf Temperaturen jenseits 55°C verzichtet werden.

**Bezugszeichenliste**

| | |
|---|---|
| 1 | Erster Abschnitt |
| 11 | Einspeisestelle |
| 2 | Zweiter Abschnitt |
| 21 | Einheit zur mechanischen Abscheidung (Ultrafiltrationseinheit) |
| 22 | Eingangsbereich |
| 23 | Ausgangsbereich |
| 3 | Dritter Abschnitt |
| 31 | Entnahmestelle |
| 32 | Verbindung |
| 33 | weitere Reinigungseinrichtungen |
| 4 | Vierter Abschnitt |
| 41 | Fördermittel |
| 42 | Mittel gegen Rückfluss |
| 42A | Rückschlagventil |
| 42B | Weitere Einheit zur mechanischen Abscheidung (UF-Einheit) |
| F | Förderrichtung |
| S | Strömungsrichtung |
| T | Teilvolumen |
| R | Restvolumen |

## Patentansprüche

1. System zur Leitung und Reinigung von Flüssigkeiten, welches in Strömungsrichtung (S) einen ersten Abschnitt (1) mit einer Einspeisestelle (11), einen zweiten Abschnitt (2) in Form einer Ultrafiltrationseinheit zur mechanischen Abscheidung von Mikroorganismen, und einen dritten Abschnitt (3) mit mindestens einer Entnahmestelle (31) umfasst, wobei der dritte Abschnitt (3) eine Verbindung (32) zu einem vierten Abschnitt (4) aufweist, über den ein Flüssigkeitsvolumen des dritten Abschnittes (3) zumindest teilweise der Ultrafiltrationseinheit zuführbar ist, und wobei der vierte Abschnitt eine weitere Ultrafiltrationseinheit aufweist.

2. System nach Anspruch 1, wobei die Flüssigkeit eine wässrige Flüssigkeit ist.

3. System nach Anspruch 1 oder 2, wobei der vierte Abschnitt ferner (4) ein Fördermittel (41) umfässt.

4. System nach Anspruch 3, wobei das Fördermittel (41) eine Pumpe ist.

5. System nach einem der vorhergehenden Ansprüche, wobei die Ultrafiltrationseinheit einen Eingangsbereich (22) und einen Ausgangsbereich (23) aufweist.

6. System nach einem der vorhergehenden Ansprüche, welches ferner mindestens ein diagnostisches Mittel zur qualitativen und/oder quantitativen Bestimmung von Mikroorganismen in der Flüssigkeit umfasst.

7. System nach einem der vorhergehenden Ansprüche, welches ferner Vorrichtungen umfasst, die aus der Gruppe bestehend aus Biosensoren, Trübungssensoren, Strömungssensoren, Drucksensoren, Sandfiltern, UV-Desinfektionseinheiten, Hitzebehandlungseinheiten, Beprobungsstellen, und Probenentnahmestellen ausgewählt sind.

8. Verfahren zur Reduzierung der Belastung einer in einem System zur Leitung und Reinigung von Flüssigkeiten enthaltenen, zumindest vorübergehend strömungsfreien Flüssigkeit mit Mikroorganismen, wobei das System in Strömungsrichtung (S) einen ersten Abschnitt (1) mit einer Einspeisestelle (11), einen zweiten Abschnitt (2) in Form einer Ultrafiltrationseinheit zur mechanischen Abscheidung von Mikroorganismen, sowie einen dritten Abschnitt (3) mit mindestens einer Entnahmestelle (31) umfasst, und wobei der dritte Abschnitt ferner eine Verbindung (32) zu einem vierten Abschnitt (4) aufweist, über den ein Flüssigkeitsvolumen des dritten Abschnittes (3) zumindest teilweise der Ultrafiltrationseinheit zuführbar ist, wobei die Reduzierung der Belastung das im dritten Abschnitt (3) enthaltene Flüssigkeitsvolumen betrifft und erfolgt, indem dieses Flüssigkeitsvolumen über den vierten Abschnitt (4) zumindest teilweise der Ultrafiltrationseinheit zugeführt wird, **dadurch gekennzeichnet, dass** der vierte Abschnitt (4) eine weitere Ultrafiltrationseinheit aufweist, wodurch eine Umgehung des zweiten Abschnittes (2) durch Mikroorganismen im Flüssigkeitsvolumen des ersten Abschnittes (1) verhindert wird.

9. Verfahren nach Anspruch 8, wobei die im dritten Abschnitt (3) vorhandene Flüssigkeit der Ultrafiltrationseinheit des zweiten Abschnittes (2) über den vierten Abschnitt (4) kontinuierlich oder diskontinuierlich zugeführt wird.

10. Verfahren nach Anspruch 8 oder 9, wobei kontinuierlich oder diskontinuierlich eine quantitative und/oder qualitative Messung der Mikroorganismen erfolgt.

11. Verfahren nach Anspruch 10, wobei die Zuführung der Flüssigkeit aus dem dritten Abschnitt (3) über den vierten Abschnitt (4) in die Ultrafiltrationseinheit des zweiten Abschnittes (2) in Abhängigkeit der erhaltenen Messdaten erfolgt.

12. Verfahren nach einem der Ansprüche 8 bis 11, ferner umfassend einen Reinigungsschritt zum Entfernen von Mikroorganismen aus der bzw. den Ultrafiltrationseinheiten.

## Claims

1. System for the piping and purification of liquids, comprising in flow direction (S) a first section (1) with a supply point (11), a second section (2) in the form of an ultrafiltration unit for mechanical separation of microorganisms, and a third section (3) with at least one tapping point (31), wherein the third section (3) has a connection (32) to a fourth section (4) through which a liquid volume of the third section (3) can at least partially be supplied to the ultrafiltration unit, and wherein the fourth section comprises a further ultrafiltration unit.

2. System according to claim 1, wherein the liquid is an aqueous liquid.

3. System according to claim 1 or 2, wherein the fourth section (4) further comprises a conveying means (41).

4. System according to claim 3, wherein the conveying means (41) is a pump.

5. System according to any of the preceding claims, wherein the ultrafiltration unit comprises an entry region (22) and an exit region (23).

6. System according to any of the preceding claims, further comprising at least one diagnostic means for the qualitative and/or quantitative determination of microorganisms in the liquid.

7. System according to any of the preceding claims, further comprising devices which are selected from the group consisting of biosensors, turbidity sensors, flow sensors, pressure sensors, sand filters, UV disinfection units, heat treatment units, points for sampling, and points for sample collection.

8. Method for the reduction of the contamination of an at least temporarily flow-free liquid being contained in a system for the piping and purification of liquids with microorganisms, wherein the system comprises in flow direction (S) a first section (1) with a supply point (11), a second section (2) in the form of an ultrafiltration unit for mechanical separation of microorganisms, as well as a third section (3) with at least one tapping point (31), and wherein the third section (3) further has a connection (32) to a fourth section (4) through which a liquid volume of the third section (3) can at least partially be supplied to the ultrafiltration unit, and wherein the reduction of the contamination relates to the liquid volume which is present in the third section (3) and takes place in that this liquid volume is at least partially supplied to the ultrafiltration unit through the fourth section (4), **characterized in that** the fourth section (4) comprises a further ultrafiltration unit whereby a circumvention of the second section (2) by microorganisms in the liquid volume of the first section (1) is prevented.

9. Method according to claim 8, wherein the liquid volume which is present in the third section (3) is continuously or discontinuously supplied to the ultrafiltration unit of the second section (2) via the fourth section (4).

10. Method according to claim 8 or 9, wherein a qualitative and/or quantitative measurement of the microorganisms takes place either continuously or discontinuously.

11. Method according to claim 10, wherein the supply of the liquid volume from the third section (3) via the fourth section (4) to the ultrafiltration unit of the second section (2) is effected in dependence of the obtained measurement data.

12. Method according to any of claims 8 to 11, further comprising a cleaning step for removing microorganisms from the ultrafiltration unit(s).

## Revendications

1. Système pour la conduite et le nettoyage de liquides qui comprend, dans le sens d'écoulement (S), une première section (1) avec un point d'alimentation (11), une deuxième section (2) en forme d'une unité d'ultrafiltration pour une séparation mécanique de microorganismes, et une troisième section (3) avec au moins un point de prélèvement (31), dans lequel la troisième section (3) contient une liaison (32) à une quatrième section (4) par laquelle un volume de liquide de la troisième section (3) peut être amené au moins en partie à l'unité d'ultrafiltration, et dans lequel la quatrième section contient une autre unité d'ultrafiltration.

2. Système selon la revendication 1, dans lequel le liquide est un liquide aqueux.

3. Système selon les revendications 1 ou 2, dans lequel la quatrième section (4) comprend de plus un transporteur (41).

4. Système selon la revendication 3, dans lequel le transporteur (41) est une pompe.

5. Système selon une des revendications précédentes, dans lequel l'unité de filtration contient une entrée (22) et une sortie (23).

6. Système selon une des revendications précédentes, lequel comprend de plus au moins un moyen diagnostique pour la détermination qualitative et/ou quantitative de microorganismes dans le liquide.

7. Système selon une des revendications précédentes, lequel comprend de plus des dispositifs sélectionnés dans le groupe composé de bio-senseurs, des senseurs de turbidité, des senseurs de courant, des senseurs de pression, des filtres à sable, des unités de désinfection par UV, des unités de traitement thermique, des points d'échantillonnage, et des points de prélèvement d'échantillons.

8. Procédé pour la réduction de la charge en microorganismes d'un liquide, au moins temporairement sans courant, contenu dans un système pour la conduite et le nettoyage de liquides, lequel système comprend, dans le sens d'écoulement (S), une première section (1) avec un point d'alimentation (11), une deuxième section (2) en forme d'une unité d'ultrafiltration pour une séparation mécanique de microorganismes, et une troisième section (3) avec au moins un point de prélèvement (31), et dans lequel la troisième section (3) contient une liaison (32) à une quatrième section (4) par laquelle un volume de liquide de la troisième section (3) peut être amener au moins en partie à l'unité d'ultrafiltration, dans lequel la réduction de la charge concerne le volume de liquide contenu dans la troisième section (3) et se produit en ce que ce volume de liquide est amené au moins en partie par la quatrième section (4) à l'unité d'ultrafiltration, **caractérisé en ce que** la quatrième section (4) comprend une autre unité d'ultrafiltration, ce par quoi un contournement de la deuxième section (2) par les microorganismes dans le volume de liquide de la première section est empêché.

9. Procédé selon la revendication 8, dans lequel le liquide présent dans la troisième section (3) est amené de manière continue ou discontinue à l'unité d'ultrafiltration de la deuxième section (2) par la quatrième section (4).

10. Procédé selon la revendication 8 ou la revendication 9, dans lequel une mesure quantitative et/ou qualitative des microorganismes se produit de manière continue ou discontinue.

11. Procédé selon la revendication 10, dans lequel l'apport du liquide provenant de la troisième section (3) par la quatrième section (4) dans l'unité d'ultrafiltration de la deuxième section (2) se produit en fonction des données de mesure obtenues.

12. Procédé selon une des revendications 8 à 11 qui comprend de plus une étape de nettoyage pour l'élimination des microorganismes de la ou les unité(s) d'ultrafiltration.
